# EUROPÄISCHE PATENTSCHRIFT

(11) **EP 0 871 677 B1**
(45) Veröffentlichungstag und Bekanntmachung des Hinweises auf die Patenterteilung: **17.02.2010**
(21) Anmeldenummer: 96944674.9
(22) Anmeldetag: 30.12.1996
(51) Int. Cl.: C08G 63/553, C08L 67/06, C09D 167/06

(54) **TRÄNK-, VERGUSS- UND ÜBERZUGSMASSEN**
IMPREGNATION, SEALING AND COATING COMPOUNDS
MATIERES D'IMPREGNATION, DE SCELLEMENT ET DE REVETEMENT

(30) Priorität: 04.01.1996 DE 19600149
(43) Veröffentlichungstag der Anmeldung: 21.10.1998
(73) Patentinhaber: Elantas GMBH, Abelstrasse 45 46483 Wesel (DE)
(72) Erfinder: BLUM, Rainer, D-67069 Ludwigshafen (DE); LOERZER, Thomas, Setagaya-ku Tokyo 154 (JP); HEGEMANN, Günther, D-22301 Hamburg (DE); EICHHORST, Manfred, D-22113 Oststeinbek (DE)
(74) Vertreter: Isenbruck, Günter
(86) Internationale Anmeldenummer: PCT/EP1996/005862
(87) Internationale Veröffentlichungsnummer: WO 1997/025362

(56) Entgegenhaltungen:
- EP-A- 0 186 165
- EP-A- 0 275 034
- DE-A1- 3 107 450
- US-A- 4 801 629

## Beschreibung

Die vorliegende Erfindung betrifft monomerenfreie Polyesterharze als Tränk-, Verguß- und Überzugsmassen für elektrotechnische und elektronische Bauteile sowie für Trägermaterialien für flächige Isolierstoffe.

Die Polymermatrix bekannter Tränk-, Verguß- und Überzugsmassen für elektrotechnische Bauteile, wie Motorwicklungen, Transformatorwicklungen u.ä., wird aus ungesättigten Polyestern, die in vinylisch ungesättigten Verbindungen, wie Styrol, Vinyltoluol, Allylphthalat und monomeren oder oligomeren Acryl- oder Vinylestern gelöst sind, durch radikalisch ausgelöste Copolymerisation aufgebaut. Unter Tränk-, Verguß- und Überzugsmassen werden Harzmassen verstanden, die in der Elektrotechnik nach den allgemein bekannten Verfahren der Tauchtränkung, Träufeltechnik, dem Tauchrollierverfahren, dem Überflutungsverfahren und dem Verguß zur Tränkung von Wicklungen angewendet werden, wobei diese Verfahren gegebenenfalls durch Anwendung von Vakuum, Vakuum und/oder Druck unterstützt werden. Auch die Imprägnierung von Trägermaterialien für flächige Isolierstoffe wie Glasseiden, Glimmerbänder und andere saugfähige Stoffe sowie Kombinationen hiervon werden unter diesem Begriff verstanden, wobei gegebenenfalls die Härtung im B-Zustand abgebrochen werden kann, um härtbare Prepregs zu erhalten.

Nachteile dieses Verfahrens nach dem Stand der Technik ergeben sich aus den ungesättigten Monomeren die für eine schnelle und vollständige Aushärtung der Massen zwingend notwendig sind. Solche Stoffe sind z.B. monomere oder niedermolekular oligomerisierte Acrylate, Allylphthalat, Styrol, α-Methylstyrol und Vinyltoluol. Diese Stoffe sind gesundheitsschädlich und hautreizend. Bei bekannten Anwendungen von Tränkmitteln mit diesen Stoffen treten Masseverluste von 20 - 30 % auf. Diese erheblichen Mengen müssen von der Arbeitsstelle entfernt werden, um Gesundheitsgefahren für die Beschäftigten zu vermeiden. Die abgesaugten Verdunstungsmengen werden in der Regel in Abluftverbrennungen entsorgt. Dabei entstehen unerwünschte Emissionen. Die verbrannten Stoffe sind auch mit erheblichen wirtschaftlichen Verlusten verbunden. Weiter besteht die Gefahr, daß diese monomeren Stoffe nicht vollständig bei der Härtung mit eingebaut werden. In den gehärteten Massen verbleibende Restmonomeren können, besonders aus Elektroisoliermassen, die in der Regel beim Gebrauch warm werden, austreten und zu Geruchsbelästigungen und Gesundheitsschädigungen führen, oder sie härten in den Massen allmählich nach, wodurch sich deren Gebrauchseigenschaften unerwünscht verändern.

Ungesättigte Polyesterharze mit Struktureinheiten des Dihydrodicyclopentadiens (=DCPD) sind Gegenstand zahlreicher Patente.

In der DE-A-31 07 450 werden ungesättigte Polyester mit Oligomeren des Cyclopentadiens als Endgruppen beschrieben, die als Lösungen in ethylenisch ungesättigten Monomeren zur Herstellung von Formkörpern und Überzügen Verwendung finden können.

Die EP-A-101 585 betrifft ungesättigte Polyesterharze, die durch Addition von Cyclopentadien an die Doppelbindung des Polyesters modifiziert und dann in Vinylmonomeren aufgelöst werden.

Die EP-A-118 786 bezieht sich auf ungesättigte Polyesterharze, die mit Dicyclopentadien modifiziert sind und in Vinyl- oder Allylmonomeren gelöst in einem zweistufigen Verfahren zu Formstoffen mit hoher Temperaturbeständigkeit gehärtet werden. Dabei sind in der zweiten Stufe die Anwendung von Temperaturen oberhalb 200°C für mindestens eine Stunde, bevorzugt für 24 Stunden bei 250°C oder die Bestrahlung mit beschleunigten Elektronen mit einer Beschleunigungsspannung von 300 bis 1000 kV notwendig. Solche Massen sollen auf Grund ihrer guten Eigenschaften für den Einsatz auf dem Elektrosektor geeignet sein. Die geforderten Nachhärtebedingungen schließen aber eine Verwendung als Vergußmasse für die meisten Anwendungen aus, da modernere Elektrobauteile durch die Kombination aus elektrotechnischen und elektronischen Bauelementen durch so hohe Temperaturen zerstört werden. Weiter sind die langen Härtezeiten für eine rationelle Serienfertigung von Bauteilen ungeeignet.

Die EP-A-260 688 betrifft eine Weiterentwicklung der EP-A-118786. Auch diese Schrift bezieht sich auf Polyesterharze, die in vinylischen Monomeren gelöst sind. Es wird ebenfalls ein zweistufiges Härtungsverfahren benutzt, bei dem ein Nachteil der älteren Veröffentlichung, nämlich die hohen Temperaturen von über 200°C bei der Nachhärtung in der zweiten Stufe, durch die Verwendung einer speziellen Auswahl an Radikalbildnern von 200°C auf 120°C bis 200°C, vorzugsweise auf 150°C bis 180°C, abgesenkt werden.

In der DE-A-32 30 924 wird ein spezielles Verfahren zur Herstellung von in Vinylmonomeren gelösten Polyesterharzen mit Cyclopentadienstrukturen beschrieben.

In der EP 0 684 284-AI werden synergistische Mischungen aus ungesättigten Polyetheresterharzen und Dicyclopentadienpolyesterharzen beschrieben, die in Styrol gelöst und in Gegenwart von peroxidischen Katalysatoren gehärtet werden.

Die DE-A-26 48 351 und DE-A-26 48 352 betreffen ungesättigte Polyesterharzzubereitungen (Formverbindungen) die ohne Verwendung von monomeren ungesättigten Stoffen, wie Styrol, als feste staubfreie Granulate, mit eingearbeiteten Füllstoffen, z.B. Glasfasern und eingearbeiteten Katalysatoren bei Raumtemperatur lagerstabil sind. Zur Verarbeitung werden sie aufgeschmolzen, die Schmelze ist für eine kurze, zur Verarbeitung ausreichende Zeit stabil, und härtet dann unter Hitze. Bevorzugt ist hierbei eine Spritzformung.

Aufgabe der vorliegenden Erfindung ist es, die oben geschilderten Nachteile des vorbekannten Standes der Technik zu beheben.

Gelöst wird die Aufgabe durch den Gegenstand von Anspruch 1.

Überraschenderweise gelingt dies durch den erfindungsgemäßen Einbau von Dihydrodicyclopentadienstrukturen bei der Herstellung der Polyester und ihren speziellen Gesamtaufbau, wodurch ohne vinylisch ungesättigte Monomere auch schon bei Raumtemperatur flüssige und lagerstabile Systeme bzw. Systeme, die einen so niedrigen Erweichungspunkt aufweisen, daß verarbeitungsfertige Schmelzen sehr lange unverändert lagerstabil sind, erhalten werden. Weiter sind diese Systeme für eine kombinierte Härtung durch UV-Licht und Wärme geeignet.

Die erfindungsgemäß als Tränk-, Verguß- und Überzugsmassen für elektrotechnische und elektronische Bauteile sowie für Trägermaterialien für flächige Isolierstoffe verwendeten monomerenfreien, insbesondere styrolfreien gesättigten oder ungesättigten Polyesterharzen oder Gemische aus gesättigten und ungesättigten Polyesterharzen weisen die Struktureinheiten der allgemeinen Formeln (I) und/oder (II) auf.

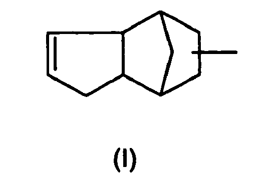

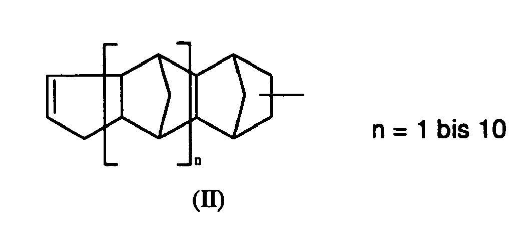

Die Struktureinheiten der allgemeinen Formel (I) und/oder (II) sind in Form von Estern des Dihydrodicyclopentadienols mit monomeren oder polymeren Carbonsäuren enthaltend Gruppierungen der Formel (III) und/oder in Form von Estern des Oligodihydrodicyclopentadienols mit monomeren oder polymeren Carbonsäuren enthaltend Gruppierungen der Formel (IV) 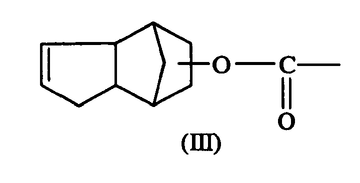 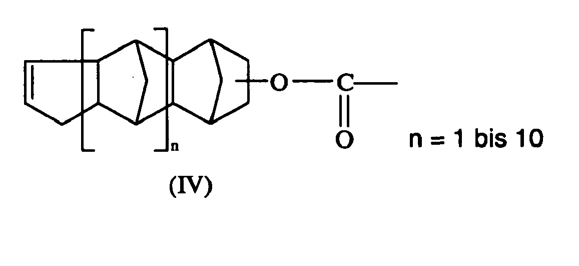 eingebaut

Die Struktureinheiten der Formeln (I) und/oder (II) werden durch Mitverwendung von Verbindungen der Formeln (V) und/oder (VI) 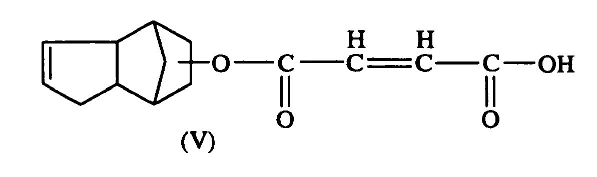 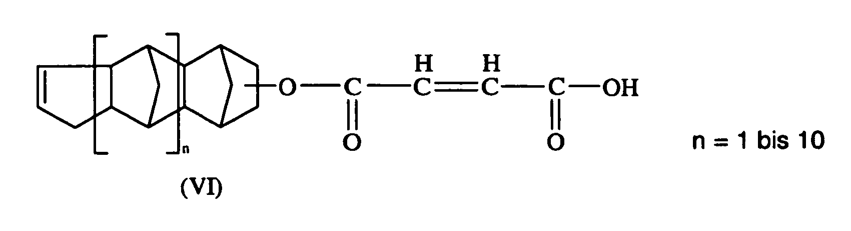 d.h. durch Dihydrodicylopentadienolhalbester der Malein- und Fumarsäure bzw. durch Halbester der Malein- und Fumarsäure mit Oligomeren des Dihydrodicyclopentadienols eingeführt.

Bevorzugt ist auch die Verwendung solcher Polyester, die unter Mitverwendung von Alkoholen und Polyolen, die ethoxyliert oder propoxyliert sind, aufgebaut wurden, sowie von Polyestern, die unter Mitverwendung von ein- oder mehrwertigen Alkoholen vom Typ der Polyesterpolyole oder Polyetherpolyole, wie z.B. Polyethylenoxyd, Polypropylenoxyd oder Polytetrahydrofuran aufgebaut wurden.

Für den Aufbau der Polyester ist es auch vorteilhaft, ethylenisch ungesättigte Bausteine, insbesondere Maleinsäure und Fumarsäure mitzuverwenden.

Eine vorteilhafte Ausgestaltung der Erfindung besteht auch darin, daß sie chemisch gebundene Photoinitiatoren enthalten, die Xanthon, Thioxanthon- und/oder Phenonstrukturen aufweisen, wobei vorzugsweise als chemisch gebundener Photoinitiator Hydroxybenzophenon und/oder Benzophenontetracarbonsäure in die Polyesterharze einkondensiert sein können.

Die erfindungsgemäßen Tränk-, Verguß- und Überzugsmassen können mit Peroxyden mit oder ohne reaktionsbeschleunigende Coinitiatoren bei Raumtemperatur oder erhöhter Temperatur gehärtet werden, gegebenenfalls zunächst bis zu einem teilgehärteten B-Zustand, um später vollständig ausgehärtet zu werden. Ebenso können die erfindungsgemäßen Tränk-, Verguß- und Überzugsmassen mit aktinischer Strahlung gehärtet werden, wobei die erforderlichen Photoinitiatoren entweder in den Massen chemisch gebunden enthalten sind oder den Massen zugesetzt wurden oder sowohl chemisch gebundene als auch zugesetzte Photoinitiatoren eingesetzt werden.

Eine bevorzugte Ausgestaltung der Erfindung besteht auch darin, daß zusätzlich Veresterungsprodukte von Verbindungen der Formeln (V) und/oder (VI) mit monofunktionellen Alkoholen, polyfunktionellen Alkoholen, deren Alkoxylierungsprodukten, Polyetherpolyolen, Polyesterpolyolen, wie Polyethylenoxid, Polypropylenoxid, Polyten-ahydrofuran und/oder Polycaprolakton mit eingesetzt werden.

Bevorzugt ist auch, daß die Tränk-, Verguß- und Überzugsmassen bei Raumtemperatur flüssig sind oder Erweichungsbereiche nach DIN53180 von unter 130°C, bevorzugt unter 90°C, besonders bevorzugt unter 40°C aufweisen, bei einer Viskosität von unter 100000 mPas bei 100°C, bevorzugt unter 30000 mPas bei 75°C, besonders bevorzugt unter 5000 mPas bei 50°C und dabei mindestens 24 Stunden viskositätsstabil sind, bei einer Temperatur, bei der sie eine Viskosität von maximal 10000 mPas, bevorzugt maximal 2000 mPas aufweisen. Die Einstellung dieser Bereiche erfolgt bevorzugt durch die Mitverwendung der oben genannten Veresterungsprodukte.

Es ist auch möglich, die Härtung mit aktinischer Strahlung und die Härtung mit Peroxiden oder C-C-labilen Stoffen zu kombinieren.

Ebenso von speziellem Interesse sind Veresterungsprodukte der Verbindungen der Formeln (V) und/oder (VI) mit monofunktionellen imidgruppenhaltigen Alkoholen oder Säuren z.B. gemäß DE-A-1570273 und/oder polyfunktionellen imidgruppenhaltigen Alkoholen oder Säuren und/oder imidgruppenhaltigen Hydroxysäuren, z.B. gemäß DE-A-17 20 323.

Es ist zweckmäßig, die Tränk-, Verguß- und Überzugsmassen zur Erniedrigung der Viskosität bei der Applikation zu erwärmen oder - im Falle von Feststoffen - aufzuschmelzen.

Die erfindungsgemäßen monomerenfreien Tränk-, Verguß- und Überzugsmassen für die Elektroisolierung sind sowohl unter energiereicher Strahlung, bevorzugt UV-Licht, als auch radikalisch bei Raumtemperatur mit bekannten Kombinationen von Peroxyden und Co-Initiatoren wie z.B. Schwermetallsalzen, sowie durch Wärme mit thermisch radikalliefernden Startern wie Peroxyden, Azostartern oder C-C-labilen Verbindungen härtbar. Weiter sind die genannten Methoden zur Härtung auch in beliebiger Kombination verwendbar. Bevorzugt ist die kombinierte Härtung mit thermisch erzeugten Radikalen und durch UV-Licht erzeugten Radikalen. Auch die Härtung zu einem B-Zustand, d.h. einem teilgehärteten Zustand, bei dem die Härtung unterbrochen ist und später wieder gestartet werden kann, ist möglich.

Überraschenderweise sind sowohl gesättigte als auch ungesättigte Polyester, die Struktureinheiten der Formel (I) und/oder (II) aufweisen und den oben definierten Bedingungen bezüglich der Schmelz- und Viskositätsbereiche entsprechen, ohne Mitverwendung von vinylisch ungesättigten Monomeren, sowohl thermisch als auch mit Strahlen härtbar, bevorzugt kombiniert härtbar und zum Aufbau hochwertiger Elektroisoliermassen geeignet. Weiter ist von Bedeutung, daß solche Stoffe auf den vorhandenen nicht oder nur geringfügig modifizierten Anlagen verarbeitet werden können.

Die Elektroisoliermassen der vorliegenden Erfindung vermeiden die oben genannten Nachteile durch die Verwendung von speziellen gesättigten sowie ungesättigten Polyesterharzen mit Struktureinheiten des Dicyclopentadiens, die ohne Mitverwendung vinylisch ungesättigter sonstiger Verbindungen sowohl unter energiereicher Strahlung, bevorzugt UV-Licht, als auch radikalisch bei Raumtemperatur, mit bekannten Kombinationen von Peroxyden und Co-Initiatoren wie z.B. Schwermetallsalzen sowie thermisch, mit radikalliefemden Startern wie Peroxyden, Azostartern oder C-C-labilen Verbindungen härtbar sind. Auch eine beliebige Kombination der genannten Methoden kann zur Härtung verwendet werden. Bevorzugt werden sie zunächst mit UV-Licht an der Oberfläche gehärtet und dann mit Stoffen, die thermisch Radikale bereitstellen, unter Erwärmung ausgehärtet. Weiter ist ein Verfahren von Bedeutung, bei dem die Isoliermassen z.B. in elektrischen Wicklungen zunächst im Innern der Bauteile durch Stromwärme gehärtet werden und die dann unter Umständen schlecht gehärtete Oberfläche mit UV-Licht nachvernetzt wird.

Zum Aufbau der erfindungsgemäß zu verwendenden Tränk-, Verguß- und Überzugsmassen ist im einzelnen noch folgendes auszuführen.

Es handelt sich um Polyester mit Struktureinheiten der allgemeinen Formel (I) und/oder (II), die Gruppierungen der Formeln (III) und/oder (IV) tragen.

Sehr leicht zugänglich sind die Addukte von Maleinsäureanhydrid und Wasser an DCPD der Formeln (V) und (VI), die bei der erfindungsgemäßen Mitverwendung ungesättigter Polyester ebenfalls zum Aufbau der Massen mit eingesetzt werden.

Weiter ist Dihydrodicyclopentadienol der Formel (VII) kommerziell verfügbar und kann beim Aufbau der Polyester mitverwendet werden, wodurch ebenfalls die Strukturen der Formeln (I) und (II) eingeführt und gesättigte Polyester erhalten werden können.

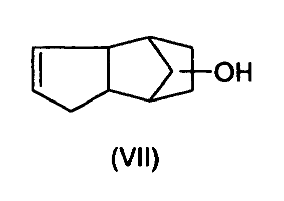

Der Aufbau der erfindungsgemäß zu verwendenden Polyesterharze kann nach dem bekannten Stand der Technik zur Herstellung von Polyestern, in der Regel durch Polykondensation von mehrfach funktionellen Hydroxylverbindungen mit mehrfach funktionellen Säuren bzw. deren Anhydriden bei höheren Temperaturen erfolgen. Weiter ist es oft vorteilhaft, von den Estern solcher Stoffe auszugehen und die Polyester durch Umesterung bei höheren Temperaturen zu erhalten, weil solche Umesterungen in einigen Fällen leichter und schneller ablaufen als die direkte Veresterung. Weiter können durch (Mit)-Verwendung von mehrfach funktionellen Aminen auch Polyester mit Amidstrukturen erhalten werden. Auch die Mitverwendung monofunktioneller Einsatzstoffe ist möglich, z.B. um das Molekulargewicht zu regulieren. Die im Folgenden aufgeführten Einsatzstoffe sollen die Erfindung nicht auf diese einschränken, sondern lediglich als Beispiel zur Verdeutlichung dienen.

Geeignete Einsatzstoffe sind Di-, Tri- und Tetracarbonsäuren, wie z.B. Adipinsäure, Korksäure, Phthalsäureisomere, Tetrahydrophthalsäure, Endomethylentetrahydrophthalsäure, Hexahydrophthalsäure, Fumarsäure, Maleinsäure, Itaconsäure, Citraconsäure, Trimellithsäure, Pyromellithsäure, Diole, wie Ethylenglykol, Polyethylenglykole, Propylenglykol, Polypropylenglykole, Butandiolisomere, Hexandiol, Neopentylglykol, Tri- und Polyole, wie Trimethylolpropan, Glyzerin, Pentaerythrit, ferner Bisphenol A, hydriertes Bisphenol A, OH-polyfunktionelle Polymere, wie hydroxylgruppenmodifizierte Polybutadiene oder hydroxylgruppentragende Polyurethanpräpolymere, Epoxydharze, polyfunktionelle Naturstoffe oder deren Folgeprodukte wie Leinölfettsäure, Dimer- und Polymerleinölfettsäure, Rizinusöl und Rizinusölfettsäure.

Weiter ist auch die Einführung von Amid- und Imidstrukturen gemäß DE 15 700 273 und DE 17 200 323 in Polyesterharze möglich. Solche Polyesteramide oder Polyesterimide können besondere Anforderungen z.B. bezüglich der Wärmestandfestigkeit häufig besser erfüllen als reine Polyester.

Die Einführung der Strukturen der Formeln (I) und (II) kann bevorzugt durch Verwendung saurer Ester nach den Formeln (III) bis (VI) bei der Polykondensation erfolgen.

Oligo-DCPC-Gemische erhält man auf bekannte Weise durch Polycycloaddition von Cyclopentadien unter Druck bei Temperaturen zwischen 170°C und 300°C. Diese können destillativ aufgearbeitet werden oder direkt mit z.B. Maleinsäureanhydrid und Wasser zu Stoffen der Formel (VI) umgesetzt werden.

Weiter ist es möglich Polyester mit einem Überschuß von Säure herzustellen und diese dann mit DCPD umzusetzen. Für einen hohen Umsatz ist dabei die Verwendung von Katalysatoren z.B. Bortrifluoridetherat notwendig.

Bei höheren Temperaturen und Druck werden dabei auch Oligo-DCPD-Strukturen gebildet.

Enthalten die Polyester bei dieser Umsetzung Doppelbindungen in der Polymerkette, z.B. als Maleinsäure- oder Fumarsäureester, so werden durch Pfropfung mit Cyclopentadien Endomethylentetrahydrophthalsäurestrukturen der Formel (VIII) erzeugt.

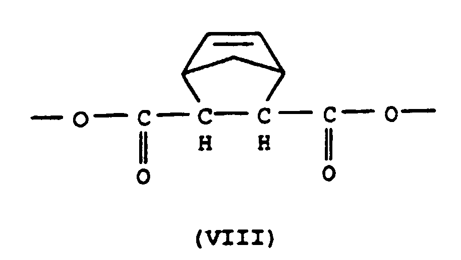

Der Aufbau der Polyester im Rahmen der vorliegenden Erfindung, mit speziellen Anforderungen z.B. an Härte, Elastizität, Viskosität, Erweichungspunkt erfolgt nach den dem Fachmann bekannten Regeln. So ist es z.B. dem Fachmann bekannt, die Elastizität ausgehärteter Polyesterharze durch die Kettenlänge der Polyole oder Polycarbonsäuren zu variieren, z.B. sind Polyesterharze, die mit Hexandiol oder Adipinsäure aufgebaut sind, flexibler als solche auf Basis von Phthalsäure und Ethylenglykol. Weiter ist die Steuerung von Eigenschaften über die Mitverwendung von polyfunktionellen Stoffen, die Verzweigungen in den Polyestermolekülen erzeugen, wie Trimellithsäure oder Trimethylolpropan, dem Fachmann bekannt.

Da die Gruppen der Formeln (I) und (II) im wesentlichen die Reaktivität bestimmen und in der Regel terminale Gruppen sind, wird die Reaktivität beim Aufbau hochmolekularer Polyester immer geringer. Ein besonderer Aspekt der vorliegenden Erfindung ist daher die Mitverwendung von monofunktionellen Alkoholen oder polyfunktionellen Hydroxyverbindungen mit mehr als zwei Hydroxylgruppen pro Molekül, die ganz oder z.T. mit Monocarbonsäuren der Formeln (V) und (VI) verestert sind, aber auch teilweise mit anderen Stoffen verestert oder verethert sein können. Diese Stoffe tragen mehrfach die reaktive Gruppe der Formeln (I) oder (II) und enthalten diese Gruppe in hoher molarer Konzentration z.B. im Falle von Monoestern niedriger Alkohole oder Diole. Sie sind somit hochreaktive Vernetzer, aus denen die Tränk-, Verguß- und Überzugsmassen gegebenenfalls allein aufgebaut sind, die aber bevorzugt anteilig in üblichen linearen oder niederverzweigten Polyesterharzen enthalten sind.

Ein besonderer Aspekt der vorliegenden Erfindung ist die Mitverwendung dieser Stoffe, die z.T. niedrigviskose Flüssigkeiten mit sehr hohem Siedepunkt sind, als Reaktivverdünner zur erfindungsgemäßen Einstellung der oben bereits definierten Schmelz- und Viskositätsbereiche.

So ist es möglich, Polyester mit relativ hoher Schmelzviskosität und hohem Erweichungspunkt für die vorliegende Erfindung zu verwenden und die gewünschte niedrige Schmelzviskosität und den gewünschten niedrigen Erweichungspunkt durch Zugabe dieser Stoffe einzustellen. Diese Stoffe stellen also speziell auf die erfindungsgemäßen Systeme abgestimmte Reaktivverdünner dar, ohne die Nachteile der bekannten ethylenisch ungesättigten Reaktivverdünner wie z.B. Styrol.

Als Stoffe dieser Art seien beispielhaft genannt die Ester von Stoffen der Formel (V) und (VI) mit Mono- und Polyalkoholen wie Butanol, Hexanol, Butandiol, Hexandiol, Polyethylenglykolmonoalkylether, Polypropylenglykolmonoalkylether, Trimethylolpropan, Pentaerythrit oder noch höher funktioneller Hydroxylverbindungen. Von besonderer Bedeutung sind auch die Ester der Ethoxylierungs- und Propoxylierungsprodukte solcher höher funktioneller Hydroxylverbindungen sowie Polyester- und Polyetherpolyole vom Typ Polyethylenoxyd, Polypropylenoxyd, Polytetrahydrofuran und Polycaprolakton. Diese letztgenannten Stoffe sind überwiegend niedrigviskose Flüssigkeiten.

Durch die Art der Alkoxylierungsmittel und den Grad der Alkoxylierung lassen sich auch Eigenschaften der Endprodukte wie z.B. Härte, Hydrophilie und Elastizität steuern. Solche Polyole können auch nur z.T. mit Stoffen der Formeln (V) und (VI) verestert sein, wobei die restlichen Hydroxylgruppen entweder frei bleiben oder mit andern Stoffen verestert oder verethert sein oder mit anderen, mit Hydroxylgruppen reaktiven, Stoffen umgesetzt sein können. Hierfür kommen z.B. Isocyanate oder Epoxyde in Frage. Weiter sind von Bedeutung hydroxylgruppenhaltige natürliche Öle wie z.B. Rizinusöl.

Von wesentlicher Bedeutung für die erfindungsgemäße Verwendung ist die Einstellung de Erweichungstemperatur und der Schmelzviskosität der Massen durch den Einsatz dieser Stoffe. Dadurch und durch die spezielle Reaktivität der DCPD-Strukturen der Polyester wird es möglich, reaktionsfertig katalysierte Stoffe bereitzustellen, die ohne Verwendung der bekannten Reaktivverdünner wie Styrol, Vinyltoluol, α-Methylstyrol, Allylester, (Meth-)Acrylester entweder schon bei Raumtemperatur flüssig verarbeitet werden oder durch Erwärmen auf die der jeweiligen Verwendung angepaßte Viskosität eingestellt werden können.

Stoffmischungen, die dieser Anforderung genügen, sind bei Raumtemperatur flüssig oder feste, harte und/oder weiche Harze mit Erweichungsbereichen nach DIN 53180 von unter 130°C, bevorzugt unter 90°C, besonders bevorzugt unter 40°C, bei einer Viskosität von unter 100000 mPas bei 100°C, bevorzugt unter 30000 mPas bei 75°C, besonders bevorzugt unter 5000 mPas bei 50°C, dabei sind sie mindestens 24 Stunden viskositätsstabil, bei einer Temperatur bei der sie eine Viskosität von maximal 1000 mPas, bevorzugt maximal 2000 mPas aufweisen.

Die Einstellung dieser, für eine erfindungsgemäße Verwendung entscheidend vorteilhaften Grenzwerte ist über die Mitverwendung der genannten Stoffe, Veresterungsprodukten der Verbindungen der Formeln (V) und/oder (VI) mit monofunktionellen Alkoholen, polyfunktionellen Alkoholen, deren Alkoxylierungsprodukten, Polyetherpolyolen, Polyesterpolyolen, wie Polyethylenoxid, Polypropylenoxid, Polytetrahydrofuran und/oder Polycaprolakton möglich.

Bevorzugt werden diese die Reaktivität und Viskosität regelnden Stoffe getrennt hergestellt und dann mit den Polyestern, Katalysatoren, farbgebenden Stoffen, Pigmenten, Füllstoffen und anderen Hilfsstoffen zu gebrauchsfertigen, lagerstabilen Massen gemischt. Es ist aber in vielen Fällen auch möglich, durch entsprechende Einstellung der stöchiometrischen Verhältnisse solche die Reaktivität und Viskosität regelnden Stoffe bei der Polyesterherstellung in situ herzustellen.

Die erfindungsgemäß einzusetzenden Polyesterharze können nach Zusatz von Stoffen, die beim Erhitzen Radikale bilden thermisch härten. Bekannte Radikalbildner sind z.B. Peroxide, Azoverbindungen, Azide und C-C-labile Stoffe. Eine erhebliche Beschleunigung der Härtung, bzw. Absenkung der Härtungstemperatur ist mit Metallcoinitiatoren wie Cobalt-, Mangan-, Eisen-, Nickel- oder Bleiverbindungen möglich. Die erfindungsgemäß zu verwendenden Polyesterharze weisen in Gegenwart von UV-Initiatoren vom Typ der α-Spalter (Norrish-Typ 1) oder der H-Donor/Akzeptor-Systeme (Norrish-Typ 2) eine hohe UV-Empfindlichkeit auf.

Eine bevorzugte Art der Einführung von H-Akzeptor-Gruppen ist die Mitverwendung von einkondensierten Phenonverbindungen, wie z.B. Hydroxy- oder Bis-hydroxy-Benzophenon oder Benzophenontetracarbonsäure bei der Polykondensation der Polyesterharze.

Die in den folgenden Beispielen genanten Teile und Prozente sind, soweit nicht anders angegeben, Gewichtsteile bzw. Gewichtsprozente.

### BEISPIEL 1

In einem Rührkolben mit Heizung und Destilliervorrichtung wurden

| | | |
|---|---|---|
| 317,1 g | Dihydrodicyclopentadienol | (2,1 Mol) |
| 292,3 g | Adipinsäure | (2,0 Mol) |
| 101,3 g | 1,6-Hexandiol | (1,0 Mol) und |
| 0,7 g | Dibutylzinndilaurat (DBTL) | |

eingewogen. Unter einem leichten Stickstoffstrom wurde rasch auf 120°C aufgeheizt. Dann wurde innerhalb 4 Stunden die Temperatur allmählich auf 190°C erhöht und das entstehende Kondensationswasser abdestilliert.

Es wurde ein Harz erhalten mit einer Säurezahl von 11 und Viskositäten von 1540 mPas bei 25°C und 260 mPas bei 50C°.

### BEISPIEL 2

In einem Rührkolben mit Heizung und Rückflußkühler wurden

| | | |
|---|---|---|
| 661,10 g | Dicyclopentadien | (5,0 Mol) und |
| 490,30 g | Maleinsäureanhydrid | (5,0 Mol) |

eingewogen. Unter einem leichten Stickstoffstrom wurde die Mischung auf 125°C erhitzt und dann über einen Tropftrichter innerhalb einer Stunde

| | | |
|---|---|---|
| 95,00 g | Wasser | (5,0 Mol + 5 g) |

zugegeben. Es wurde bei 125°C eine Stunde nachreagieren lassen. Es bildete sich eine Monocarbonsäure der Formel (V). Der Kolbeninhalt wurde auf 70°C abgekühlt. Dann wurden

| | | |
|---|---|---|
| 245,15 g | Maleinsäureanhydrid | (2,5 Mol) |
| 557,15 g | 1,6-Hexandiol | (5,5 Mol) |
| 4,00 g | Dibutylzinndilaurat (DBTL) und | |
| 0,50 g | Hydrochinon | |

zugegeben. Unter einem leichten Stickstoffstrom wurde rasch auf 120°C aufgeheizt. Dann wurde innerhalb von 6 Stunden die Temperatur allmählich auf 190°C erhöht und das dabei entstehende Kondensationswasser abdestilliert.

Es wird ein hochviskoses Harz erhalten mit einer Säurezahl von 18 und Viskositäten von 7840 mPas bei 50°C und 2016 mPas bei 75°C.

### BEISPIEL 3

In einem Rührkolben mit Heizung und Rückflußkühler wurden

| | | |
|---|---|---|
| 1586,52 g | Dicyclopentadien | (12,0 Mol) und |
| 1176,72 g | Maleinsäureanhydrid | (12,0 Mol) |

eingewogen. Unter einem leichten Stickstoffstrom wurde die Mischung auf 125°C erhitzt und dann über einen Tropftrichter innerhalb einer Stunde

| | | |
|---|---|---|
| 226,00 g | Wasser | (12,0 Mol + 10 g) |

zugegeben. Es wurde bei 125°C eine Stunde nachreagieren lassen. Es bildete sich eine Monocarbonsäure der Formel (V).

Der Kolbeninhalt wurde auf 70°C abgekühlt. Dann wurden

| | | |
|---|---|---|
| 715,00 g | 1,6-Hexandiol | (6,05 Mol) |
| 4,00 g | Dibutylzinndilaurat (DBTL) und | |
| 0,50 g | Hydrochinon | |

zugegeben. Es wurde unter einem leichten Stickstoffstrom rasch auf 120°C aufgeheizt. Dann wurde innerhalb von 6 Stunden die Temperatur allmählich auf 190°C erhöht und das entstehende Kondensationswasser abdestilliert.

Es wurde ein weiches Harz erhalten mit einer Säurezahl von 24 und Viskositäten von 3650 mPas bei 50°C und 944 mPas bei 75C°.

### BEISPIEL 4

In einem Rührkolben mit Heizung und Rückflußkühler wurden

| | | |
|---|---|---|
| 661,10 g | Dicyclopentadien | (5,0 Mol) und |
| 490,30 g | Maleinsäureanhydrid | (5,0 Mol) |

eingewogen. Unter einem leichten Stickstoffstrom wurde die Mischung auf 125°C erhitzt und dann über einen Tropftrichter innerhalb einer Stunde

| | | |
|---|---|---|
| 95,00 g | Wasser | (5,0 Mol + 5 g) |

zugegeben. Es wurde bei 125°C eine Stunde nachreagieren lassen. Es bildete sich eine Monocarbonsäure der Formel (V).

Der Kolbeninhalt wurde auf 70°C abgekühlt. Dann wurden

| | | |
|---|---|---|
| 1859,00 g | TP 200 | (5,5 Mol-Äquivalent-OH) |

(TP 200 ist ein Ethoxylierungsprodukt aus einem Mol Trimethylolpropan und 20 Mol Ethylenoxyd)

| | |
|---|---|
| 3,00 g | Dibutylzinndilaurat (DBTL) und |
| 0,30 g | Hydrochinon |

zugegeben. Unter einem leichten Stickstoffstrom wurde rasch auf 120°C aufgeheizt. Dann wurden innerhalb von 6 Stunden die Temperatur allmählich auf 190°C erhöht und das entstehende Kondensationswasser abdestilliert. Es wurde ein hochviskoses, flüssiges Harz erhalten mit einer Säurezahl von 21. Viskositäten sind 9340 mPas bei 25°C und 1560 mPas bei 75°C.

### BEISPIEL 5

In einem Rührkolben mit Heizung und Rückflußkühler wurden

| | | |
|---|---|---|
| 661,10 g | Dicyclopentadien | (5,0 Mol) und |
| 490,30 g | Maleinsäureanhydrid | (5,0 Mol) |

eingewogen. Unter einem leichten Stickstoffstrom wurde die Mischung auf 125°C erhitzt und dann über einen Tropftrichter innerhalb einer Stunde

| | | |
|---|---|---|
| 95,00 g | Wasser | (5,0 Mol + 5 g) |

zugegeben. Bei 125°C wurde eine Stunde nachreagieren lassen. Es bildete sich eine Monocarbonsäure der Formel (V).

Der Kolbeninhalt wurde auf 70°C abgekühlt. Dann wurden

| | | |
|---|---|---|
| 683,40 g | Diethylenglykolmonoethylether | (5,1 Mol) |
| 4,00 g | Dibutylzinndilaurat (DBTL) und | |
| 0,50 g | Hydrochinon | |

zugegeben. Unter einem leichten Stickstoffstrom wurde rasch auf 120°C aufgeheizt. Dann wurde innerhalb von 6 Stunden die Temperatur allmählich auf 190°C erhöht und das entstehende Kondensationswasser abdestilliert.

Es wurde ein niederviskoser Stoff erhalten mit einer Säurezahl von 32 und Viskositäten von 290 mPas bei 25°C und 134 mPas bei 50°C.

Prüfung der gemäß den Beispielen 1 bis 5 hergestellten Produkte auf Härtbarkeit

Die gemäß den Beispielen 1 bis 4 hergestellten Produkte wurden zur besseren Rührbarkeit auf 40°C erwärmt und im Verhältnis 70:30 mit dem gemäß Beispiel 5 erhaltenen Produkt gemischt. Dann wurden 4 % t.-Butylperbenzoat und 3 % Benzophenon, bezogen auf die Gesamtmenge, zugegeben.

Diese Mischungen sind bei Raumtemperatur gut fließend und weisen bei 40°C *folgende Viskositäten auf:*
Beispiel 1 + Beispiel 5 : 480 mPas
Beispiel 2 + Beispiel 5 : 2090 mPas
Beispiel 3 + Beispiel 5 : 1160 mPas
Beispiel 4 + Beispiel 5 : 880 mPas

Von diesen Mischungen wurde jeweils soviel in einen tiefen Blechdeckel gegossen, daß dieser ca. 2 cm hoch gefüllt ist, die Blechdeckel wurden dann auf einer Heizplatte bei 50C mit einer Quecksilbermitteldrucklampe mit einer Energie von 80 mW/cm² für 60Sekunden bestrahlt, dabei bildete sich eine leicht klebrige Haut von ca. 0,5 mm Dicke, unter der die Hauptmasse noch flüssig ist. Die Blechdeckel wurden dann in einem Ofen bei 140°C 4 Stunden getempert. Nach dem Abkühlen wurden kompakt durchgehärtete Harzblöcke erhalten.

Proben der katalysierten, gebrauchsfertigen Mischungen wurden bei 40°C 48 Stunden gelagert. Danach hat sich weder ihre Viskosität noch ihr Härteverhalten geändert.

Weitere Proben der Mischungen wurden gemischt mit 4 % Methylisobutylketonperoxid, 2 % Kobaltoctoat (1-%ig in Toluol) und 3 % Benzophenon. Von diesen Mischungen wurde jeweils soviel in einen tiefen Blechdeckel gegossen, daß dieser ca. 2 cm hoch gefüllt ist. Die Blechdeckel wurden dann bei Raumtemperatur mit 80 mW/cm² mit einer Quecksilbermitteldrucklampe für 60 Sekunden bestrahlt. Dabei bildete sich eine leicht klebrige Haut von ca. 0,5 mm Dicke, unter der die Hauptmasse noch flüssig ist. Die Blechdeckel wurden dann bei Raumtemperatur (ca. 25 °C) gelagert. Nach 24Stunden wurden kompakt durchgehärtete Harzblöcke erhalten. Die nichtbestrahlten Reste der Mischungen sind nach 48 Stunden durchgehärtet. Diese Versuche zeigen die Möglichkeit der Kalthärtung der erfindungsgemäßen Stoffe.

## Patentansprüche

1. Tränk-, Verguss- und Überzugsmaterial für elektrotechnische und elektronische Bauteile und für Trägermaterialien für flächige Isolierstoffe enthaltend
a) ungesättigte Polyesterharze, wobei die ungesättigten Polyesterharze erhältlich sind durch Polykondensation von Verbindungen der Formeln (V) und/oder (VI) 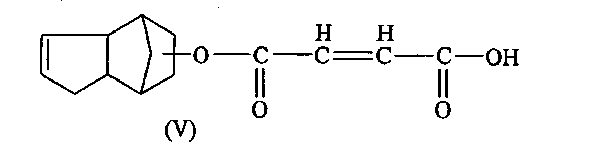 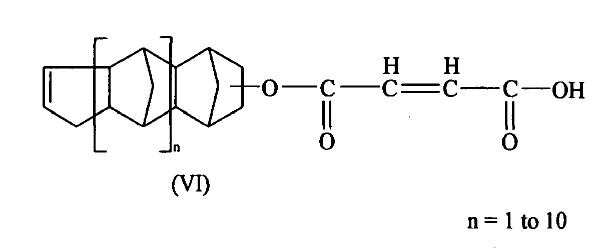 mit polyfunktionellen Hydroxyverbindungen und polyfunktionellen Säuren und/oder deren Anhydriden bei erhöhten Temperaturen, und
b) optional monomere Ester von Mono- oder Polyalkoholen mit Verbindungen der Formeln (V) und/oder (VI) als Reaktivverdünner,
und daneben keine weiteren vinylisch ungesättigten Monomere.

2. Tiänk-, Verguss- und Überzugsmaterial für elektrotechnische und elektronische Bauteile und für Trägermaterialien für flächige Isolierstoffe nach Anspruch 1, **dadurch gekennzeichnet, dass** die polyfunktionellen Säuren ausgewählt sind aus der Gruppe bestehend aus Di-, Tri- und Tetracarbonsäuren.

3. Tränk-, Verguss- und Überzugsmaterial für elektrotechnische und elektronische Bauteile und für Trägermaterialien für flächige Isolierstoffe nach einem der Ansprüche 1 oder 2, **dadurch gekennzeichnet, dass** die polyfunktionellen Hydroxyverbindungen ausgewählt sind aus der Gruppe bestehend aus Diolen, Triolen und Polyolen.

4. Verwendung der Zusammensetzungen, wie sie in einem der Ansprüche 1 bis 3 definiert sind, als Tränk-, Verguss- und Überzugsmaterial für elektrotechnische und elektronische Bauteile und für Trägermaterialien für flächige Isolierstoffe.

## Claims

1. An impregnating, casting and coating material for electrical and electronic components and for carrier materials for sheet-form insulating materials, comprising
a) unsaturated polyester resins, the unsaturated polyester resins being obtainable by polycondensation of compounds of the formulae (V) and/or (VI) 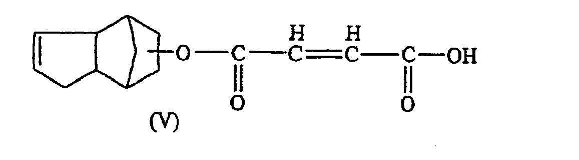 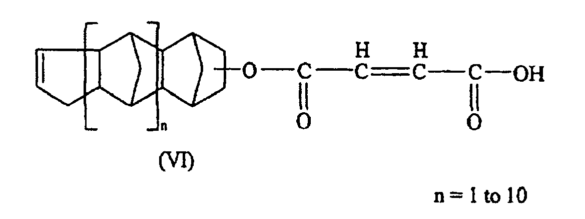 with polyfunctional hydroxy compounds and polyfunctional acids and/or their anhydrides at elevated temperatures, and
b) optionally monomeric esters of monoalcohols or polyalcohols with compounds of the formulae (V) and/or (VI) as reactive diluents,
and besides these no further vinylically unsaturated monomers.

2. The impregnating, casting and coating material for electrical and electronic components and for carrier materials for sheet-form insulating materials according to claim 1, wherein the polyfunctional acids are selected from the group consisting of dicarboxylic, tricarboxylic and tetracarboxylic acids.

3. The impregnating, casting and coating material for electrical and electronic components and for carrier materials for sheet-form insulating materials according to either of claims 1 and 2, wherein the polyfunctional hydroxy compounds are selected from the group consisting of diols, triols and polyols.

4. The use of the compositions as are defined in any of claims 1 to 3 as impregnating, casting and coating material for electrical and electronic components and for carrier materials for sheet-form insulating materials.

## Revendications

1. Matériau d'imprégnation, d'enrobage et de revêtement pour éléments électrotechniques et électroniques et pour matériaux de support pour isolants plats, contenant
a) des résines de polyester insaturées, les résines de polyester insaturées pouvant être obtenues par polycondensation de composés de formules (V) et/ou (VI) 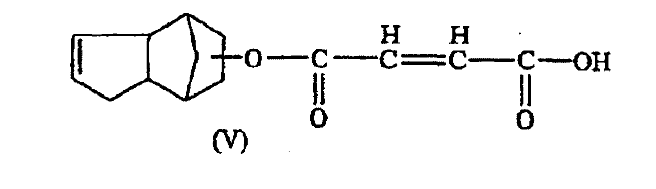 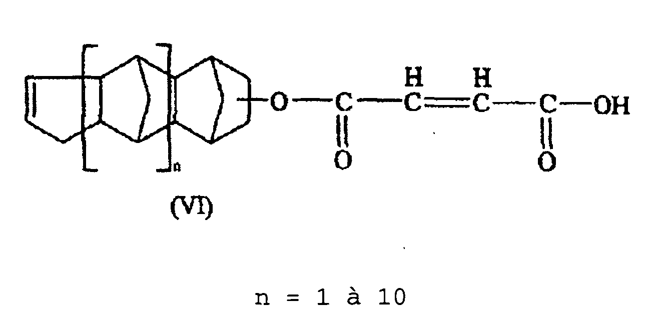 avec des composés hydroxy polyfonctionnels et des acides polyfonctionnels et/ou leurs anhydrides à températures élevées, et
b) éventuellement des esters monomères de mono- ou polyalcools avec des composés de formules (V) et/ou (VI) en tant que diluants réactifs,
et aucun monomère vinyliquement insaturé supplémentaire.

2. Matériau d'imprégnation, d'enrobage et de revêtement pour éléments électrotechniques et électroniques et pour matériaux de support pour isolants plats selon la revendication 1, **caractérisé en ce que** les acides polyfonctionnels sont choisis dans le groupe constitué des acides di-, tri- et tétracarboxyliques.

3. Matériau d'imprégnation, d'enrobage et de revêtement pour éléments électrotechniques et électroniques et pour matériaux de support pour isolants plats selon l'une quelconque des revendications 1 ou 2, **caractérisé en ce que** les composés hydroxy polyfonctionnels sont choisis dans le groupe constitué des diols, des triols et des polyols.

4. Utilisation des compositions telles que définies dans l'une quelconque des revendications 1 à 3 en tant que matériau d'imprégnation, d'enrobage et de revêtement pour éléments électrotechniques et électroniques et pour matériaux de support pour isolants plats.
